# EUROPEAN PATENT SPECIFICATION

(11) **EP 2 623 468 B1**
(45) Date of publication and mention of the grant of the patent: **21.08.2019**
(21) Application number: 12183364.4
(22) Date of filing: 06.09.2012
(51) Int. Cl.: C02F 1/68, C02F 5/08, C02F 5/10

(54) **WATER TREATMENT SYSTEMS AND METHODS**
Systeme und Verfahren zur Wasserbehandlung
Systèmes et procédés de traitement de l'eau

(30) Priority: 02.02.2012 US 201261594286 P
(43) Date of publication of application: 07.08.2013
(73) Proprietor: Nuvo Residential, LLC, Kaysville, UT 84037 (US)
(72) Inventor: Washburn, Laird, Fruit Heights, UT 84037 (US); Terry, Sean, Gilbert, AZ 85234 (US)
(74) Representative: Boult Wade Tennant LLP

(56) References cited:
- DE-A1-102004 025 259
- US-A1- 2007 267 358
- US-B1- 6 241 884
- US-B1- 7 297 257

## Description

### BACKGROUND

### 1. Technical field

Aspects of this document relate generally to systems used for transfer of one or more chemical components into a liquid. In particular, the present invention relates to water treatment systems, components, and methods of treating water whether for industrial or uses or residential water softening, using at least two streams of water, one of which carries water treatment composition to the other.

### 2. Background Art

A wide variety of conventional systems and assemblies have been devised to transfer a chemical component into a liquid. The reason for the transfer may be to start a reaction, allow for separation of a desired component in the liquid from the liquid, or to control a characteristic of the liquid. In water purification systems, filter systems have been devised that capture solid particles and foreign material present in the water as it flows through the filters. Other water processing systems operate by purifying the water through distillation processes, leaving impurities behind, or by treating the water with ultraviolet light to kill bacteria and other organisms present in the water. The taste of water has also been controlled by the use of activated carbon filters that serve to capture chemicals in the water that cause disagreeable odors and/or tastes. Each of these systems seeks to control a characteristic of the water.

Fresh water supplies across the world are typically derived from underground aquifers or streams originating in terrain rich with alkaline earth metals, including calcium (Ca²⁺) and magnesium (Mg²⁺). As a result, much of the fresh water available for industrial or residential use is enriched with cationic mineral with an alkaline pH. Such water is frequently referred to as "hard water."

A number of technologies have been developed to soften water-that is to remove or replace alkaline earth metals and decrease the pH of the fresh water. Water treatment systems for such purposes typically substitute calcium and magnesium ions contained in hard water with alkaline ions such as sodium (Na⁺) and potassium (K⁺). For this softening function, conventional water softeners often include a softening tank to soften raw, unprocessed water. The softening tank is filled with an ion exchange resin loaded with sodium or potassium ions. The sodium and potassium ions exchange with the calcium and magnesium ions in the fresh water supply. Eventually, however, the ion exchange resin becomes saturated with the alkaline earth metals and must be recharged-stripped of the unwanted ions and replaced with more desired alkaline ions. The regeneration process often involves discharging a costly and wasteful amount of water which is an increasingly important commodity. Also, this discharged water contains sodium or potassium chloride used to regenerate the ion exchange resin. In addition, many water systems were not built with water treatment systems for softening the water. Such systems often suffer from hard water buildup and become occluded.

There is, therefore, a need to provide water treatment systems that conserve the amount of fresh water consumed to soften hard water. Moreover, there is a need to provide water treatment systems that can remove hard water buildup already existing in a water system.

US 7,297,257 discloses a container or pressure vessel that includes chemicals for treating water to reduce the risk of scale. Water is introduced at the top of the container, passes through the chemical, and exits another part of the top of the container.

US 6,241,884 discloses a chemical canister or cartridge for treating liquids. The canister includes a container for a chemical. The chemical includes inlet and outlet holes that permit fluids to flow into the container and come into contact with the chemical.

US 2007/267358 discloses an online monitoring and processing system for water lines. A bypass line draws water from a main line and directs it into a chlorinator. The water in the bypass is analyzed for chlorine and pH.

DE 2004-025259 discloses methods and devices for processing water in which two flows of water are formed. The second flow of water flows through a chemical substrate in a fixed bed to produce one or more concentrates that, in turn, are mixed with the first flow of water in a controlled manner.

### SUMMARY

A water treatment system has been developed that adds a composition to hard water that then effectively softens the water. The invention involves the methods and apparatus used for adding the water treatment composition to the water. The water treatment system according to the invention is described in claims 1-12 and the method according to the invention is described in claim 13. The system comprises a water treatment device. The water treatment device is connected to a water supply including (a) components fixed in location to the water supply including: (1) channels for conveying a plurality of water streams, including a main stream and a subsidiary stream; (2) an inlet connecting the water supply to the treatment device for allowing water from the water supply to enter the treatment device, and an outlet through which water having water treatment composition leaves the treatment device; (3) a flow control device capable of controlling the flow rate of the subsidiary stream through the water treatment device; (b) at least one removable component that at least in part defines a chamber having a flow path for the subsidiary stream through the chamber, wherein the chamber contains water treatment composition.

In some embodiments, the flow path through the chamber is designed to maximize contact between the subsidiary stream and the surface of the water treatment composition. In some embodiments, the water treatment device comprises a removable cartridge capable of fitting within second compartment, the cartridge containing water treatment composition.

In some embodiments of the device and system, a first pH monitor is included. In some embodiments of the device and system, a second pH monitor is included. In some embodiments, the first pH monitor monitors the pH of the water supply. In some embodiments, the first pH monitor monitors the pH of the treated water. In some embodiments, the second pH monitor monitors the pH of the water supply.

In some embodiments of the device and system, a flow meter that measures the flow of the subsidiary stream is included. In some embodiments, the flow meter measures the flow of the main stream. In some embodiments, the cartridge has a sediment filter. In some embodiments, the water-permeable bag comprises a closable opening, the closable opening selected from the group consisting of: a zipper, stitching, hook and pile fastener, heat adhesive and contact adhesive. In some embodiments, the cartridge is releasably connected to the water treatment device.

In some embodiments of the device and system the flow control device is selected from the group consisting of: a restricting passageway, a valve, an electronic pump, an injector, and combinations of the same. In some embodiments, the pump or injector is responsive to the pH of water selected from the supply water or the treated water.

In some embodiments, an outlet line is included where outlet line is in fluid communication with the outlet of the water treatment device, the outlet line having a primary inner diameter, and wherein the flow control device constitutes a section that has a diameter smaller than the primary inner diameter of the outlet line.

In some embodiments, the water treatment composition is selected from the group consisting of: citric acid, polyphosphates, and mixtures of the same. In some embodiments, the water treatment composition is in the form selected from the group consisting of: one or more tablets, a slurry, a gel, an amorphous powder, a mixture of crystalline materials, and a concentrated solution. In some embodiments, a flow meter is included that measures the flow of a stream selected from the group consisting of: the main stream, the subsidiary stream, and both the main and subsidiary streams.

In another aspect, a method of softening water is disclosed. The method includes (a) dividing a water supply into a main stream and a subsidiary stream; (b) contacting a water treatment composition with the subsidiary stream in a water treatment device thereby dissolving a portion of the water treatment composition into the subsidiary stream; and (c) recombining the subsidiary stream carrying water treatment composition with the main stream at a controlled rate thereby softening the water supply.

The main and subsidiary streams are divided and recombined outside of the water treatment device. In some embodiments, the process also includes monitoring the pH of the water supply to determine the flow rate of the subsidiary stream. In some embodiments, the pH of the treated water is monitored to determine the flow rate of the subsidiary stream. In some embodiments, the process includes monitoring the cumulative volume of the subsidiary stream and triggering an indicator when a predetermined volume is reached. In some embodiments, the flow rate of the subsidiary stream is controlled by an injector that may be operably connected to at least one pH sensor.

Acccording to some embodiments, the water treatment composition includes citric acid and polyphosphate. In some embodiments, the water treatment composition consists essentially of citric acid and polyphosphate. In some embodiments, the water treatment composition consists of citric acid and polyphosphate. In some embodiments, the ratio of polyphosphate to citric acid is in the range of about 1:40 to about 2:5. In some embodiments, the ratio may be from about 1:20 to about 1:5 of polyphosphate to citric acid. In some embodiments, the ratio may be about 1:10 of polyphosphate to citric acid.

### BRIEF DESCRIPTION OF THE DRAWINGS

FIG. 1 is a cross section view of an implementation of a chemical release system taken through the center of an inlet and outlet of the main head;
FIG. 2 is a cross section view of an implementation of a first cartridge taken through the center of the cartridge;
FIG. 3 is a detail cross section view of a first end of the first cartridge implementation illustrated in FIG. 2;
FIG. 4 is a detail cross section view of the second end of the first cartridge implementation illustrated in FIG. 2;
FIG. 5 is a detail cross section view of the main head of the implementation of a chemical release system illustrated in FIG. 1;
FIG. 6A is a detail sectional view of a first end of an implementation of a second cartridge showing the internal structure of the first end;
FIG. 6B is a detail cross section view of the first end of the second cartridge implementation illustrated in FIG. 6A;
FIG. 7 is a detail cross section view of the first end of an implementation of a third cartridge.
FIG. 8 depicts a partial cross sectional view of an embodiment of a water treatment system with a fluid path for water softening, in accordance with the present invention.
FIG. 9 depicts a partial cross sectional view of the embodiment of FIG. 8 of a water treatment system with a fluid path for bypassing water softening.
FIG. 10 depicts a partial cross sectional view of the embodiment of FIG. 8 of a water treatment system in an "off' position.
FIG. 11A depicts a cross sectional view of one embodiment of a flow control device for use in a water treatment system.
FIG. 11B depicts a cross sectional view of a second embodiment of a flow control device for use in a water treatment system.
FIG. 11C depicts a perspective view of a third embodiment of a flow control device for use in a water treatment system.
FIG. 11D depicts a perspective view of a fourth embodiment of a flow control device for use in a water treatment system.
FIG. 12A depicts a perspective view of an open water-permeable bag for use in a water treatment system.
FIG. 12B depicts a perspective view of a closed water-permeable bag for use in a water treatment system.
FIG. 12C depicts a perspective view of a second embodiment of the closed water-permeable bag for use in a water treatment system.
FIG. 13 depicts a perspective view of a second embodiment of a water treatment system with a fluid path for water softening, in accordance with the present invention.
FIG. 14 depicts a partial cross sectional view of another example of a water treatment system with a fluid path for water softening.
FIG. 15 depicts a partial cross sectional view of another example of a water treatment system with a fluid path for water softening.

### DESCRIPTION

This disclosure, its aspects and embodiments, are not limited to the specific components or assembly procedures disclosed herein. Many additional components and assembly procedures known in the art consistent with the intended chemical release system and/or assembly procedures for a chemical release system will become apparent for use with particular embodiments from this disclosure. Thus, although particular embodiments are disclosed, such embodiments and implementing components may comprise any shape, size, style, type, model, version, measurement, concentration, material, quantity, and/or the like as is known in the art for such chemical release systems and implementing components, consistent with the intended operation.

As used herein, the term "whole house" refers to a water treatment system of a structure such as a residential home. In some embodiments of the invention, the water treatment systems and components may be used for industrial applications, whole-house systems, and subsystems. In some embodiments, the water treatment systems may be isolated to specific applications, such as for treating the water supply to cleaning and hygiene subsystems that would be found in dwellings such as sinks, bathing areas, and cleaning appliances such as dishwashers and laundry machines.

In some embodiments, a water treatment system may have components that are removed for replacing water treatment composition. As used herein, the term "fixed components" are components that are not intended to be removed for replacing water treatment composition. In such systems, parts that are intended to remain in the same physical location whether in water treatment operation or in water treatment composition replacement, such components are fixed components.

As used herein, the term "removable components" refers to components that are intended to be removed for replacing water treatment composition. In such systems, parts that are intended to be removed from their physical location when replacing the water treatment composition, such components are removable components.

As used herein, the term "polyphosphates" refers to tetrahedral PO₄ units linked together by sharing oxygen atoms such as those depicted below. 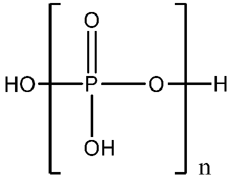 In some forms, the polyphosphates may be cyclic. In other forms, the polyphosphates may be linear.

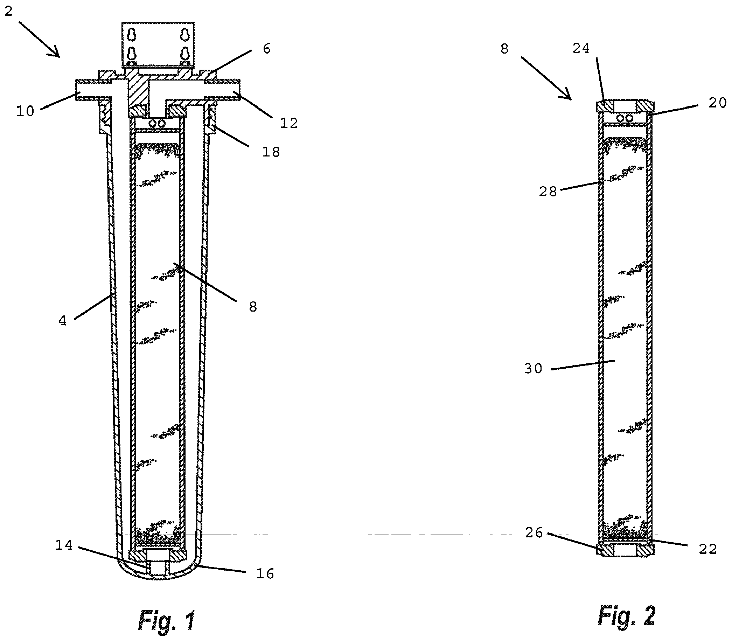

Referring to FIG. **1**, a cross section view of a chemical release system **2** is illustrated. As illustrated, the system **2** includes a pressure vessel **4** coupled to a main head **6** at a first end **18** to which a cartridge (first cartridge) **8** has been coupled. The main head **6** includes an inlet **10** and an outlet **12** that are configured to be coupled inline with a cold water line (or other line carrying another type of liquid) through the use of any of a wide variety of fittings and/or connections, such as push-connect fittings, compression fittings, welds, or any other method of coupling pipe. The cartridge **8** in particular embodiments may couple to the pressure vessel **4** through a projection **14** that extends from a second end **16** of the pressure vessel **4**.

Referring to FIG. **2**, a cartridge **8** like the one illustrated in FIG. **1** is shown. As illustrated, the body **28** of the cartridge **8** has a first end **20** and a second end **22** with a cartridge head **24** coupled at the first end **20** and an end plug **26** coupled at the second end **22**. The body **28** of the cartridge **8** may form an annularly cylindrical housing, though the body **28** may form any shaped housing depending upon the shape of the cross section of the body, such as, by non-limiting example, square, oval, elliptical, rectangular, octagonal, and any other closed shape. A chemical **30** is disposed within a portion of the body **28**. Any of a wide variety of chemicals **30** may be included in various chemical release systems, depending upon the desired function of the system. For example, if the fluid flowing through the chemical release system were water, the chemical may be a proprietary blend of biodegradable citric acid (H₃C₆H_{S}O₇) and polyphosphate (PO₄) or other phosphates marketed under the tradename Citryne® designed to prevent the buildup of scale caused by calcium carbonate and other ions in hard water on equipment and piping. In these examples, the blend may be included in the form of a powder dispersed within the body **28** or within a water permeable bag that holds the Citryne® powder. An example of such a bag is found in U.S. Pat. No. 7,297,257 to LeRoy Terry entitled "Chemical Release System," issued Nov. 20, 2007. If the fluid flowing through the chemical release system were oil, the chemical **30** may be a reactive material that may be premixed with the oil before it enters a reactor. Those of ordinary skill in the art will readily be able to selected chemicals and a proper way of placing the chemical within the body **28** in order to create the desired effect of a particular chemical release system.

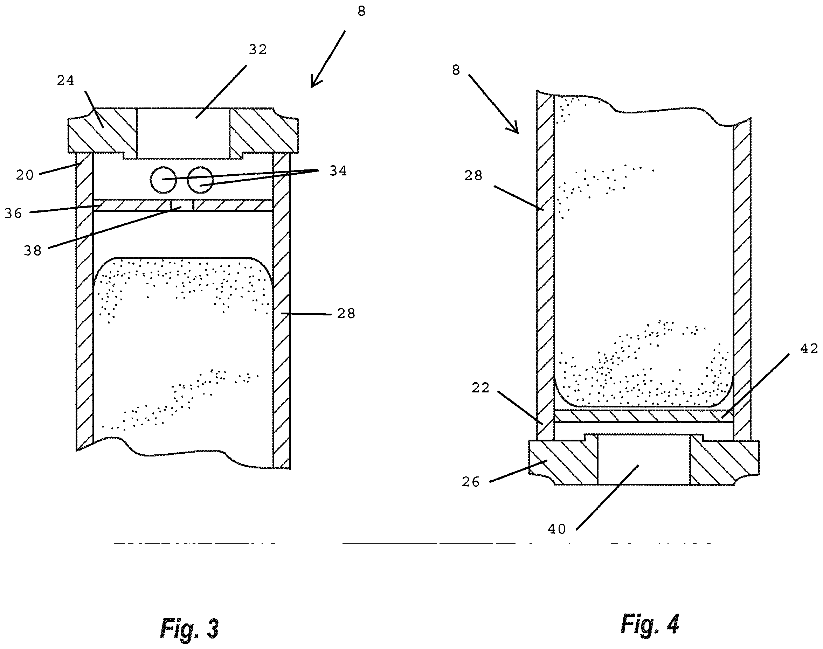

Referring to FIG. **3**, a detail view of the first end **20** of the cartridge **8** of FIG. **2** is illustrated. As illustrated, the cartridge head **24** includes a through hole **32** that is configured to engage with an annular flange in the main head **6**. The body **28** also includes two through holes **34** in a side of the body **28**, though a single through hole or more than two through holes may be utilized. The through holes **34** are located between the cartridge head **24** and a flow restrictor plate **36** disposed between the first end **20** and the second end **22** of the cartridge **8** which has substantially the same cross section as the body **28**. As illustrated, the flow restrictor plate **36** is oriented substantially parallel to the cartridge head **24**. A single opening **38** extends through the flow restrictor plate **36**. Since there are no other openings in the body between the through holes **34** and the portion of the interior of the body **28** on the side of the flow restrictor plate **36** that faces the end cap **26**, the only way for fluid to enter and leave the portion is through the single opening **38**.

Referring to FIG. **4**, the structure of the second end **22** of the cartridge **8** is illustrated showing the end cap **26** that includes a through hole **40** therethrough sized to correspond with the projection **14** that extends from the second end **16** of the pressure vessel **4**. Where the end cap **26** includes a through hole **40**, a plug plate **42** maybe enclosed that completely seals the second end **22** of the body **28** thereby preventing fluid from entering.

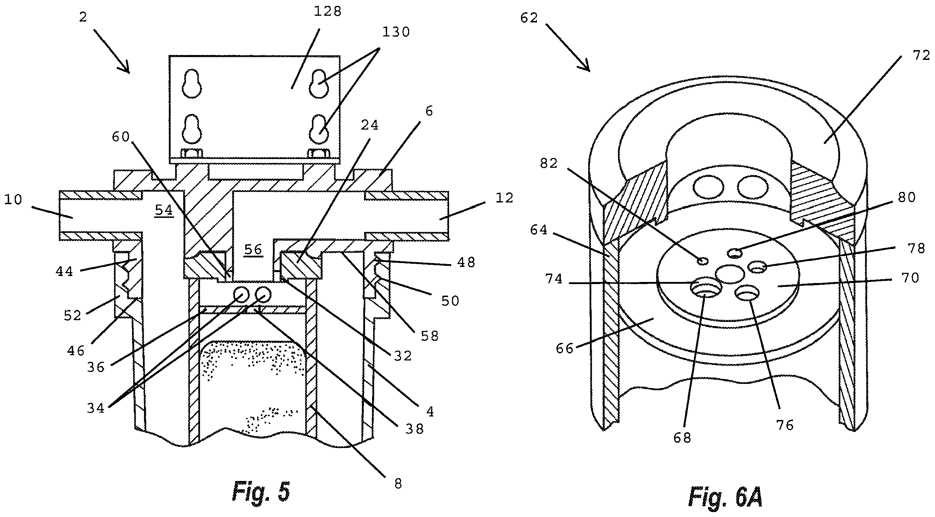

Referring to FIG. **5**, a cross section of the main head **6** illustrated in FIG. **1** is shown with the pressure vessel **4** and cartridge **8** coupled in their respective positions. As illustrated, the main head **6** includes a first annular flange **44** that engages with a shoulder **46** included in the pressure vessel **4**. As illustrated, the first annular flange **44** may include screw threads **48** that engage in corresponding screw threads **50** in an annular flange **52** extending from the shoulder **46** of the pressure vessel **4**. Other arrangements may have the pressure vessel **4** and main head **6** coupled through any of a wide variety of other structures and or systems, such as, by non-limiting example, gluing, welding, compression fittings, or any other method of coupling two pipes together. As illustrated, the main head **6** includes an inlet opening **54** in fluid connection with the inlet **10** and an outlet opening **56** in fluid connection with the outlet **12**. As illustrated, the inlet opening **54** extends out a first side **58** of the main head **6**. The first side **58** is the side of the main head **6** that faces into the internal cavity formed by the pressure vessel **4**. The outlet opening **56** is encircled by a second annular flange **60** that extends away from the first side **58** of the main head **6**. The second annular flange **60** engages in the through hole **32** of the cartridge head **24**. Additional flanges and gaskets may be included on the first side **58** of the main head **6** to aid in seating and securing the cartridge **8** against the main head **6**.

Referring to FIG. **6A**, a sectional view of a first end **64** of a second cartridge **62** is illustrated. As illustrated, the second cartridge **62** also includes a flow restrictor plate **66** with a single opening **68** in the plate, but also has an orifice selector **70** coupled with the flow restrictor plate **66** on the surface facing the cartridge head **72**. The orifice selector **70** includes a plurality of orifices **74**, **76**, **78**, **80**, and **82** that have different diameters and are configured to align with the single opening **68** in the flow restrictor plate **66** as the orifice selector **70** is rotated about the point at which it is coupled to the flow restrictor plate **66**. As illustrated, one of the orifices **74** may be the same size as the single opening **68**, or they may be larger or smaller as desired.

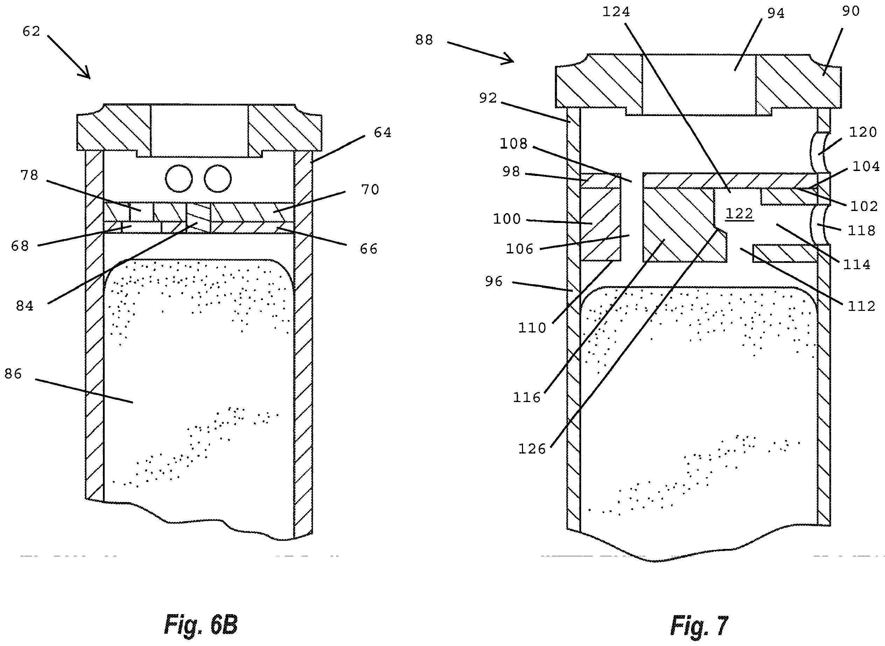

Referring to FIG. **6B**, a cross section view of the first end **64** of the second cartridge **62** illustrated in FIG. **6A** is shown. As illustrated, the orifice selector **70** is coupled to the flow restrictor plate **66** through a pivot **84** that extends into both the orifice selector **70** and the flow restrictor plate **66**. One of the orifices **78** is shown aligned with the single opening **68** in the flow restrictor plate **66** indicating that the amount of fluid flow (and the effect/amount of the chemical within the cartridge **62** passing into the fluid) can be controlled or selected by the user through rotation of the orifice selector **70**. The orifice selector **70** may also allow for the isolation of the chemical **86** in the cartridge **62** from the fluid if the user rotates the orifice selector **70** to a portion of the orifice selector **70** that does not contain a through hole over the single opening **68**. This may allow the user to perform startup and other tasks without expending the chemical **86** contained in the cartridge **62** or having to be concerned with effects caused by the chemical **86** while troubleshooting or repairing system problems.

Referring to FIG. **7**, a third cartridge **88** for a chemical release system is illustrated. As illustrated, the third cartridge **88** includes a cartridge head **90** coupled at a first end **92** of the cartridge **88** with a through hole **94** therethrough configured to engage with a first annular flange **44** of the main head **6** (similar to the other arrangements disclosed in this document). The cartridge **88** also includes a body **96** that may form a substantially annularly cylindrical housing, although any of the other shapes for the body **96** disclosed in this document may be utilized. The body **96** also has an internal cross section formed by the perimeter of the interior edge of the body **96**. A flow restrictor plate **98** is also included and is located within the body **96** between the first end **92** and a second end **96** of the body (not shown in this detail view). As in previous arrangements, the flow restrictor plate **98** is oriented substantially parallel to the cartridge head **90** and substantially conforms with the internal cross section of the body **96** and contains only one opening **108** therethrough. An internal flow body **100** is coupled to the flow restrictor plate **98** at a first side **102** of the internal flow body **100** and at the side **104** of the flow restrictor plate **98** that faces the second end of the cartridge **88**. The internal flow body also substantially conforms with the internal cross section of the body **96**.

The internal flow body **100** includes a first opening **106** that extends from the first side **102** of the internal flow body **100** through to a second side **110** of the internal flow body **100** and aligns with the only one opening **108** in the flow restrictor plate **98**. A second opening **112** also opens into the internal flow body **100** from the second side **110** and joins with a third opening **114** in a thickness **116** (width) of the internal flow body **110**. The third opening **114** is aligned substantially perpendicularly with the second opening (though it could be aligned substantially at an angle from perpendicular in various embodiments) and also aligns with a first through hole **118** in a side of the body **96**. The body **96** also includes one or more second through holes **120** in a side of the body located between the flow restrictor plate **98** and the cartridge head **90**. At the location within the internal flow body **110** where the third opening **114** and the second opening **112** join, a recirculation zone **122** may be included. The recirculation zone **122** may be formed from the intersection of a fourth opening **124** that extends inwardly from the first side **102** that has a diameter larger than the second opening **112** and is aligned with the second opening **112**. The recirculation zone **122** may include at least one taper **126** at the location where the second opening **112** and the third opening **114** join. The diameter of the first opening **106** may be smaller than a diameter of the second opening **112**, though the diameters may be the same or the diameter of the second opening **112** may be smaller.

While the flow restrictor plate **98** and the internal flow body **100** are illustrated in FIG. **7** as being nominally two separate pieces, they may be integrally formed, and the distinctions regarding sides of the individual components will no longer apply. Where the flow restrictor plate **98** and the internal flow body **100** are formed as separate pieces, they may be secured with in the body **96** and to each other by gluing, welding, or any other fastening technique.

For the exemplary purposes of this disclosure, the measurements of a third cartridge **88** like those disclosed in this document are included. The diameter of the body **96** may be 54 mm (2 1/8 inches), and the diameter of the through hole **94** in the cartridge head **90** may be 27 mm (1 1/16 inches). The length of the body **96** from the first end **92** to the second end may be 484 mm (19 1/16 inches). The thickness of the flow restrictor plate **98** may be 3 mm (1/8 of an inch) and the diameter of the flow restrictor plate **98** may be 51 mm (2 inches). The thickness **116** of the internal flow body **100** may be 16 mm (5/8 of an inch) and the diameter of the internal flow body **100** may be 51 mm (2 inches). The distance from the edge of the cartridge head **90** that faces the second end to the edge of the flow restrictor plate **98** that faces the cartridge head **90** may be 19 mm (3/4 of an inch). The only one opening **108** in the flow restrictor plate **98** and the first opening **106** in the internal flow body **100** may both have diameters of 5 mm (3/16 of an inch). The diameter of the second opening **112**, third opening **114**, and fourth opening **124** in the internal flow body **100** may be 6 mm, 10 mm, 13 mm (1/4 inch, 3/8 inch, and 1/2 inch), respectively. The diameter of the first through hole **118** in the side of the body **96** and the diameter of the one or more second through holes **120** in a side of the body **96** may be equal and be 10 mm (3/8 of an inch). However, the diameters of the first through hole **118** and of the one or more second through holes **120** may be different. The chemical included in the cartridge **88** may be that marketed under the tradename Citryne ® and may be enclosed in a permeable bag.

Referring to FIG. **5**, the first cartridges **8** may operate in conjunction with a main head **6** and pressure vessel **4** as follows when water is used as the working fluid: Water from inlet **10** flows down inlet opening **54** to fill the internal cavity of the pressure vessel **4**. Water from the internal cavity then flows through the through holes **34** into the space between the canister head **24** and the flow restrictor plate **36** and passes through the single opening **38** in the flow restrictor plate **36**. Because there are no other openings in the cartridge **8** that can allow water from the inlet opening **54** to enter the cartridge **8**, all of the water that flows through chemical release system **2** enters the through holes **34** on its way to the outlet **12**. The water that passes through the single opening **38** in the flow restrictor plate **36** encounters the chemical in the cartridge and some of the chemical dissolves in the water. Without being bound by any theory, it is believed that movement of the dissolved chemical into the water above the flow restrictor plate **36** in a first cartridge **8** is driven primarily by diffusion of the dissolved chemical through the water in the single opening **38** in the flow restrictor plate **36**. Dissolved chemical that has passed through the single opening **38** in the flow restrictor plate **36** is mixed with water passing through the through holes **34**, enters the outlet opening **56**, and moves out the outlet **12**. The second cartridges **62** also operate in a similar way with the water and dissolved chemical passing through the particular orifice and single opening on its way out to the outlet.

Referring to FIG. **7**, the third cartridges **88** operate similarly to the first cartridges **8** and second cartridges **62** except that after the water fills the internal cavity of the pressure vessel **4**, water enters through the first through hole **118**, the one or more second through holes **120**, through the only one opening **108** in the flow restrictor plate **98**, and the first opening **106** in the internal flow body **100**. Without being bound by any theory, it is believed that the flow regime within the third cartridge **88** is as follows: Water enters the first through hole **118** and passes through the third opening **114** in the internal flow body **100**, encountering the recirculation zone **122**, in arrangements that have such a zone. In such arrangements, it is believed that the water circulates in the space created by the fourth opening **124** in the internal flow body **100** and then passes through the second opening **112** in the internal flow body **100** into the space between the internal flow body **100** and the chemical within the cartridge **88**. Chemical dissolves in the water and is carried along with the water through the first opening **106** in the internal flow body **100** and through the only one opening **108** in the flow restrictor plate **98** where it mixes with water that has passed through the one or more second through holes **120**. The mixed water then passes out the through hole **94** in the cartridge head **90** and moves to the outlet opening **56** to the outlet **12**.

The chemical release systems **2** may be installed in either free standing or wall or flat support configurations. Referring to FIG. **5**, in wall or flat support configurations, a bracket **128** may be used with a plurality of fastener holes **130** therethrough for fastening the chemical release system **2** to the wall or flat support. Any of a wide variety of configurations are possible using the principles disclosed in this document.

In places where the description above refers to particular arrangements of chemical release systems, it should be readily apparent that a number of modifications may be made without departing from the spirit thereof and that these arrangements may be applied to other chemical release systems.

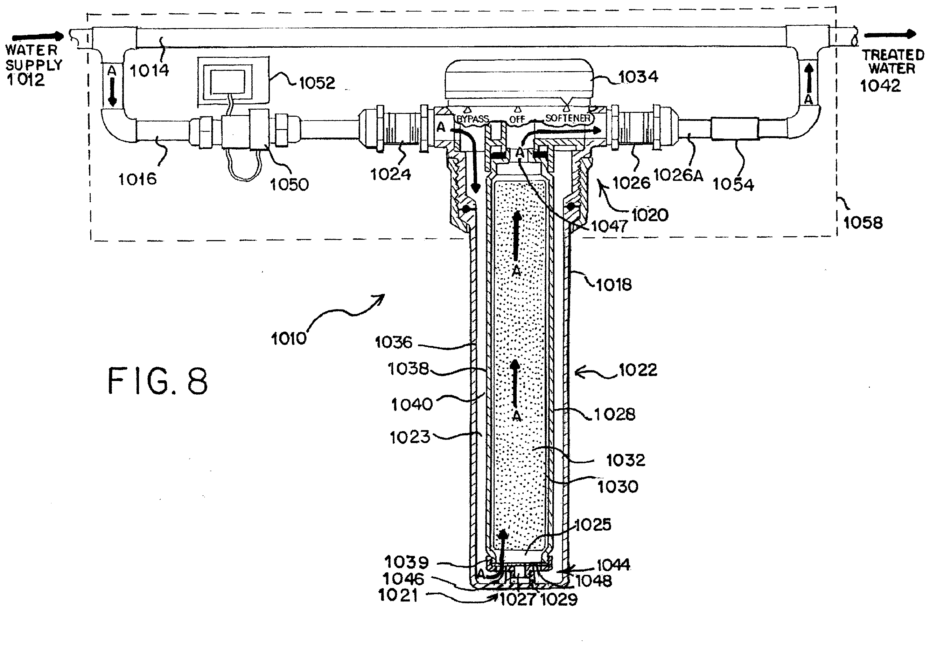

The water treatment system and its various components disclosed herein may be used with various methods for treating water. An embodiment of the water treatment system in accordance with the present invention is generally depicted in **FIG. 8**. The system **1010** may be integrated into an industrial water system, a whole house water system or optionally integrated into specific water circuits with a water supply **1012**. In some configurations, the water supply **1012** may be a line providing water from a municipal water system or a well. In other configurations, the water supply **1012** may be a line branching off from a main line to supply water for a specific purpose, such as heating water or providing drinking water.

Water from the water supply **1012** can be divided into a plurality of streams. In some embodiments, a first stream also called a main stream **1014** that can travel from the water supply to a water fixture (not shown) such as a faucet, equipment or appliance (not shown) such as a washing machine. A second stream also called a subsidiary stream **1016** diverges from the water supply to a water treatment device **1018**. Thus, the water supply **1012** is connected to the water treatment device **1018** through a channel (passageway) for the subsidiary stream **1016**. As shown, the streams are divided at a point outside the water treatment device **1018**.

The water treatment device **1018** includes an inlet **1024** and an outlet **1026** through which the subsidiary stream **1016** enters and exits the water treatment device **1018**. The inlet **1024** and outlet **1026** are mounted into the water treatment device **1018** through a head portion **1020**. The head portion **1020** includes a plurality of channels. A first channel directs the subsidiary stream through the water treatment device **1018** and into a first compartment. A second channel directs the **1016** subsidiary stream only through the head portion **1020** between the inlet **1024** and the outlet **1026** thereby bypassing the first and a second compartment. The head portion **1020** may also include a valve for preventing the subsidiary stream **1016** from flowing between the inlet **1024** and the outlet **1026**.

In some embodiments, the inlet **1024**, outlet **1026**, and head portion **1020** are components fixed in location to the water supply.

The water treatment device **1018** includes at least two compartments surrounded by a body portion **1022** of the device **1018**. In some embodiments, the body portion **1022** may surround a water treatment container or cartridge **1028** operably coupled to the head portion **1020**. In such a case, the cartridge **1028** constitutes the second compartment **1025**, and the first compartment **1023** is the volume within the body portion **1022** not filed by the cartridge **1028**.

In some embodiments such as those depicted in **FIGS. 8-10**, the cartridge **1028** encloses water-permeable bag **1030** containing water treatment composition **1032.** The water-permeable container may be made of a variety of materials. Such materials include spun bound fibers such as spun bound polyethylene, polypropylene, polyesters, and similar polymeric material that are water-permeable.

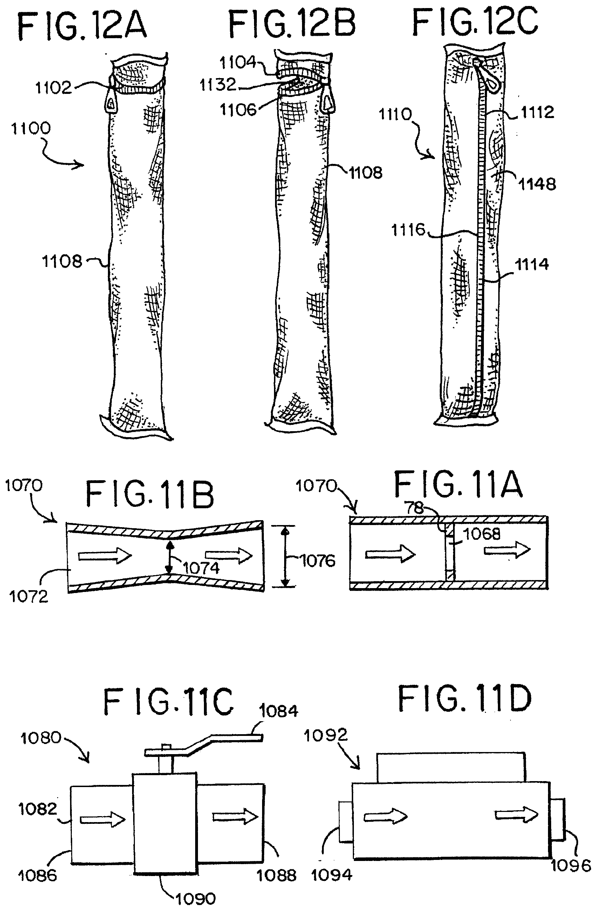

As shown in FIGS. **12A**, **12B**, and **12C**, a water-permeable bag **1100** may include a zipper **1102**. Thus, the zipper in a closed configuration makes the water treatment composition **1132** only accessible through the water-permeable material of the bag walls **1108**. The zipper **1102** includes two corresponding sides **1104** and **1106** with a plurality of interlocking teeth which can releasably connect the corresponding sides **1104** and **1106**. In an open configuration, the zipper enables an operator to add, remove, refill, or otherwise manipulate the amount of water treatment composition **1132** in the water-permeable bag **1100**. As shown in **FIG. 12A**, the water-permeable bag **1100** has a zipper **1102** which latitudinally traverses a portion of the bag **1100**. In **FIG. 12B**, an alternate embodiment of a water-permeable bag **110** is shown. The water-permeable bag **1110** includes a zipper **1112** with two corresponding sides **1114** and **1116**. As shown in this embodiment, the zipper **1112** longitudinally traverses a portion a bag wall **1118**.

In some embodiments, the water-permeable bag **1100** may be flexible. In other embodiments, the water permeable bag **1100** may be rigid.

In some embodiments, the zipper may completely traverse the entire perimeter (whether circular or some other shape) of the bag. In some embodiments, the zipper traverses only a portion of the entire perimeter of a bag.

In some embodiments, the zipper may be replaced with stitching, contact adhesive, heat-activated adhesive, hook and pile fasteners (Velcro®), plastic zippers with or without interlocking teeth and sliders. In some embodiments, the fastener for a bag or container can be releasable. In some embodiments, the fastener for a bag or container can be resealable.

The water treatment composition **1032** may be any of a variety of materials used to treat water. In some embodiments, the water treatment composition is selected from citric acid, polyphosphates, and mixtures of the same. In some embodiments, the water treatment composition includes citric acid. In some embodiments, the water treatment composition is citric acid. In some embodiments, the water treatment composition includes polyphosphates. In some embodiments, the water treatment composition is polyphosphates. In some embodiments, the water treatment composition includes citric acid and polyphosphates. In some embodiments, the water treatment composition is citric acid and polyphosphates.

When the water treatment composition includes both citric acid and polyphoshpates, the proportion of the two can be selected to enhance the performance of the water treatment device or system. Advantages of such rations can include the reduction of blue water arising from dissolved copper in pH adjusted water systems having copper pipes.

For example, in smaller systems servicing water supply for a small dwelling such as would use a 19 mm (¾ inch) or equivalent water supply line at about 689 kPa (100 psi), a water treatment composition may include a ratio of from about 1:40 to about 2:5 parts by weight of polyphosphate to one part by weight of citric acid. The ratio may be from about 1:20 to about 1:5 of polyphosphate to citric acid. The ration may be about 1:10 of polyphosphate to citric acid.

In some embodiments, the water treatment composition may be in the form of a compressed pellet. In those embodiments, the pellets may be in a container such as a bag, or may be added to a cartridge without being in a bag.

Returning to **FIG. 8**, cartridge **1028** also includes a first opening **1046** at a bottom portion **1044**. In some embodiments, the cartridge **1028** may also include a sediment filter **1048**. The sediment filter **1048** may be located downstream from the first opening **1046** and adjacent the water-permeable container **30** such as is shown in **FIG. 8**. Alternatively, the sediment filter **1048** may be located upstream from the water-permeable container **1030** and adjacent to the first opening **1046** such as shown in **FIGS. 8-10**. In some embodiments, the cartridge **1028** may have an end cap **1039** which can securely engage with the cartridge **1028** through opposing threads. The end cap **1039** may include a plurality of openings serving as the first opening **1046**.

The body portion **1022** has a bottom **1021** upon which the cartridge **1028** may adjoin. In some embodiments, the bottom **1021** of the body portion **1022** includes one or more concentric circular ribs **1029** that may support the bottom of the cartridge **1028**. In some embodiments, the end cap **1039** has a central cavity **1027** for receiving a first set of circular ribs **1029**. The resulting interface allows the cartridge **1028** to be held in place with the body portion **1022** of the water treatment device **1018**.

In some embodiments, the body portion **1022** and cartridge **1012** is removable from the head portion **1020**. The body portion **1018** and cartridge **1028**, therefore, can be removable components. Moreover, cartridge **1028** can define a chamber having a flow path for the subsidiary stream through the chamber, wherein the chamber contains water treatment composition. The flow path through the chamber is designed to maximize contact between the subsidiary stream **1016** and the water treatment composition **1032**. In this regard, the flow path through a chamber (or compartment) substantially traverses the largest dimensional path of compartment-the cartridge **1028** shown in **FIG. 8** for example.

The head portion **1020** may optionally include a path selector or valve **1034**. The path selector **1034** allows an operator to direct the subsidiary stream **1016** through a number of optional fluid paths traversing the water treatment device **1018.** For example, in one embodiment depicted in **FIG. 8**, the path selector **1034** is indicated to be in the "softener" (or "treatment") position which directs the subsidiary stream **1016** through a fluid path **A** that passes from the inlet through the head and body portions **1020** and **1022** and out the outlet **1026**. The subsidiary stream **1016**, travelling along path **A**, mixes with or contacts the water treatment composition **1032** and carries water charged with water treatment composition back to the main stream **1014**. When the subsidiary and main streams recombine, the resulting water is treated water **1042**.

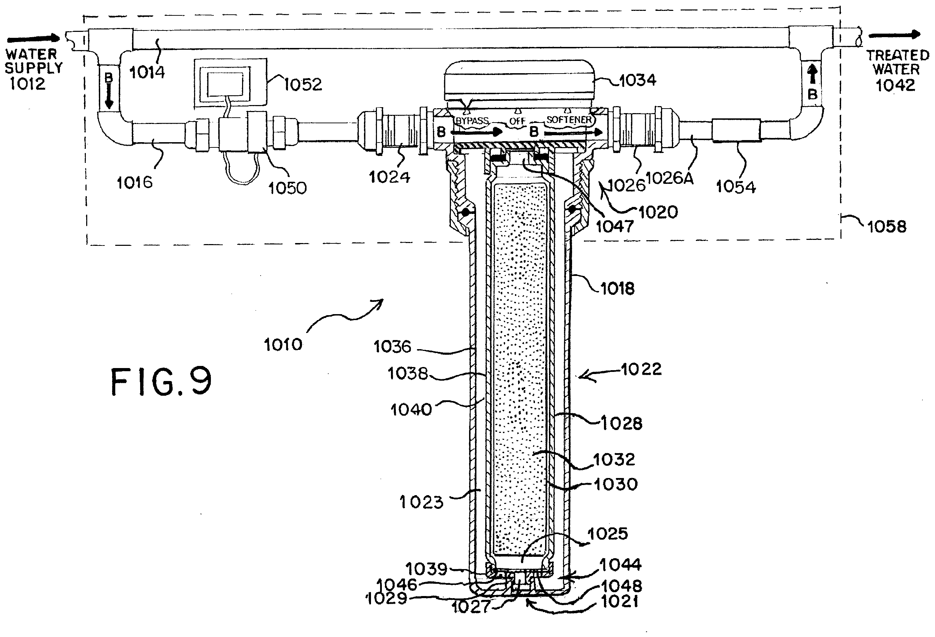

Alternatively in the embodiment depicted in **FIG. 9**, the path selector **1034** is indicated in the "bypass" position which directs the subsidiary stream **1016** through a fluid path **B** that passes from the inlet through the head portion **1020** and out the outlet **1026** without passing through the body portion **1022**. The subsidiary stream **1016**, travelling along path **B**, does not mix with water treatment composition before rejoining the main stream **1014**. When the subsidiary and main streams recombine, the resulting water is untreated.

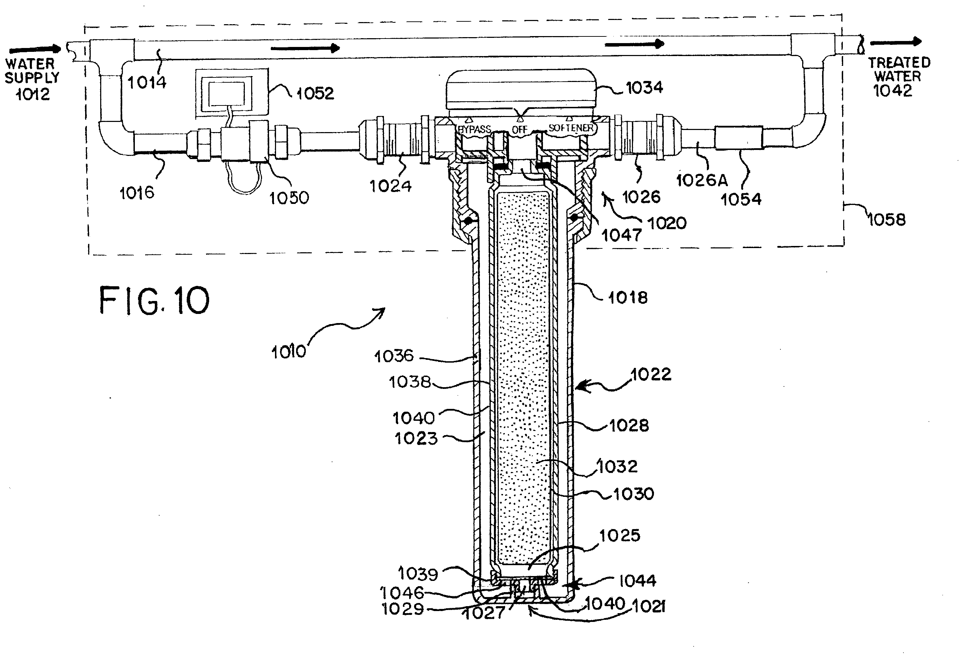

In yet another embodiment depicted in **FIG. 10**, the path selector **1034** is indicated in the "off' position. In this position, the subsidiary stream **1016** is blocked from travelling through the water treatment device **1018**. This position would be useful for removing removable components of the water treatment system for maintenance.

Returning to the embodiment depicted in **FIG. 8**, the subsidiary stream follows path **A** entering the water treatment device **1018** at inlet **1024**. The subsidiary stream passes through the head portion **1020** and into the body portion **1022**. Within the body portion **1022**, a cavity **1040** is formed between the device wall **1036** and the cartridge wall **1038**. Thus, the space (cavity **1040**) between the device and cartridge walls **1036** and **1038** may be considered a compartment or channel. This cavity **1040**, also serves as a passageway through which the subsidiary stream passes through a segment of the body portion **1022** of the water treatment device **1018**. That passageway runs between inlet **1024** and the opening **1046** of the cartridge **1028**. Thus, in some embodiments, path **A** includes this passageway. Moreover, path **A** travels over the water-permeable container **1030** within the cartridge wall **1038** from the first opening **1046** until reaching a second opening **1047** of the cartridge **1028** adjacent to the head portion **1020** and then exiting the water treatment device **1018** through outlet **1026**.

Thus, in a water treatment operation, supply water **1012** is divided into two paths to form a main stream **1014** and a subsidiary stream **1016**. The subsidiary stream **1016** enters the water treatment device **1018** at an inlet **1024**, follows path **A** through the cartridge **1028** and exits at an outlet **1026** before returning to the main stream **1014**. While passing through the cartridge **1028**, the subsidiary stream **1016** becomes charged with water treatment composition **1032**.

The water treatment system **1010** includes a flow control device **1054** for controlling the flow rate of the subsidiary stream **1016** through the water treatment device **1018.** The flow control device **1054** can be located in a variety of locations, so long as it is in operable connection to the subsidiary stream **1016.** For example, as shown in **FIG. 8**, the flow control device **1054** is connected to the outlet **1026** via an outlet line **1026A** in fluid communication with the outlet **1026**.

The flow control device can be of a variety of different forms. For example in **FIG. 11A**, the flow control device is in the form of a restricting passageway **1070** where a passageway **1072** has a narrower diameter **1074** at some point in the passageway **1072** which is smaller than a wider diameter **1076** of the passageway **1072**. The narrowness of the smaller diameter **1074** may be selected so that the volume of the subsidiary stream **1016** joining the mainstream **1014** carries enough water treatment composition to treat the water supply **1012** to a satisfactory condition (e.g. pH, composition concentration, or combination of the same).

In some embodiments, the restricting passageway **1070** may have a gradual reduction diameter until a point at which the narrower diameter **1074** is reached. In other embodiments, the restricting passageway may not be gradual but instead may have a disc **1078** with an orifice **1068** such as that depicted in **FIG. 11B**. The orifice **1068** may be smaller than the remainder of the passageway. Depending on the desired volumetric flow, an operator can select a disc with an orifice of sufficient size to reduce the rate at which a subsidiary stream **1016** traverses the passageway **1070**.

In another example shown in **FIG. 11C**, the flow control device is in the form of a valve **1080**. The valve may have inlet and outlet ports **1086** and **1088** through which a passageway **1082** may traverse carrying the subsidiary stream **1016**. A valve member **1090** opens and closes the passageway **1082** by which an operator may open and close with handle **1084**. A variety of valves may be used such as ball, butterfly, and disc valves.

In another example shown in **FIG. 11D**, the flow control device is in the form of a pump **1092**. The pump **1092** includes inlet and outlet ports **1094** and **1096**, and a pump member **1098**. The pump member **1098** increases or decreases the rate of flow between the inlet and outlet ports **1094** and **1096** in response to electrical or mechanical force. A variety of pumps may be used such as a positive displacement, velocity, and centrifugal pumps.

In some embodiments, the flow control device **1054** may be operably connected to another device such as a pH sensor, flow meter, or other sensor dynamically responsive to some condition of the water treatment system **1010** as discussed further herein.

The flow control device **1054** may be located in a variety of locations. In one embodiment, for example in **FIGS. 8-10**, the flow control device may be located downstream from the outlet **1026** but at a point upstream from where the subsidiary and main streams **1014** and **1016** recombine.

In some embodiments, the water treatment system optionally includes a flow meter **1050** for measuring the flow of various streams. The flow meter **1050** can be located in a variety of locations. For example, the embodiment depicted in **FIGS. 8-10** has a flow meter **1050** located upstream from the inlet **1024** but downstream from a point where the main and subsidiary streams **1014** and **1016** separate. In this embodiment, the flow meter **1050** measures the volume of the subsidiary stream **1016**.

In another embodiment, the flow meter **1050** can be located upstream from where the main and subsidiary streams **1014** and **1016** separate. In this embodiment, the flow meter **1050** measures the total volume of untreated water operating with the system which is the sum of the main and subsidiary streams **1014** and **1016**.

In another embodiment, the flow meter **1050** can be located downstream from the point where the main and subsidiary streams **1014** and **1016** separate but instead of measuring the subsidiary stream **1016**, the flow meter **1050** in this location measures the volume of water in the main stream **1014**.

In still another embodiment, the flow meter **1050** can be located downstream from the point where the main and subsidiary streams **1014** and **1016** come together. In this embodiment, the flow meter **1050** measures the total volume of treated water operating with the system which is the sum of the main and subsidiary streams **1014** and **1016**.

The flow meter may be operably connected to a flow indicator **1052**. The flow indicator **1052** may be electronic device displaying one or more values of information. In some embodiments, the flow indicator **1052** may display a cumulative value representing the volume of water measured by the flow meter **1050**.

In some embodiments, the flow indicator **1052** may display a value computed from the difference between a preset value and the total flow measured by the flow indicator. In such an embodiment, an operator may set the preset value to correspond with a total water treatment capacity associated with the water treatment composition within a fresh cartridge **1028**. For example, if the amount of water treatment composition in a freshly loaded cartridge is capable of treating 379 m³ (100,000 gallons), then the flow indicator may display the difference between the 379 m³ (100,000 gallon) preset value and the cumulative volume which has passed through the flow meter **1050**. Thus, after loading a fresh cartridge, the flow indicator **1052** would indicate the preset value (e.g. 379 m³ (100,000 gallons)). After the system has operated for some period of time and a total volume of 94 m³ (25,000 gallons) has been measured by the flow meter **1050**, the flow indicator **1052** would indicate a volume of 284 m³ (75,000 gallons). After the system has operated for a longer period of time and a total volume of 284 m³ (75,000 gallons) has been measured by the flow meter **1050**, the flow indicator **1052** would indicate a volume of 94 m³ (25,000 gallons). Thus, when the flow indicator approaches a zero value, an operator would understand that a new supply of water treatment composition will need to be added to the system.

In some embodiments, an indicator can display a time value. In such embodiments, the indicator could display a time value corresponding to the amount of time remaining before a new supply of water treatment composition will need to be added to the system or has been in use. In some embodiments, the time value could be correlated to the flow rate using flow meter **1050** which measures volume passing through the system or a portion of the system. Alternatively, the displayed time value may be calculated based on an average rate at which the flow meter **1050** measures volume passing through the system or a portion of the system.

Alternatively, the flow indicator could indicate a time value corresponding to the total time the water treatment composition has been used by the system. In such embodiments, the indicator can be set or reset by an operator when water treatment composition is added to the system. The indicator would then measure the time elapsed since the indicator was set or reset by the operator. Alternatively, the flow indicator could indicate a time value corresponding to the total time the water treatment composition could be used by the system. In this embodiment, the indicator can be set to a predetermined time period by an operator that corresponds to a period in which it is expected that the water treatment composition will be consumed (or a period which is just less than that). The indicator would then identify the remaining time so that an operator can anticipate and obtain replacement water treatment composition before, at, or after the indicator displays that the predetermined time has elapsed.

In yet another alternative, the flow indicator could indicate a status of the water treatment composition. A variety of status indications may be used. For example, the status indicators may be "Good," "Order," and "Replace." The "Good" indicator may be shown when the system operates with a sufficient amount of water treatment composition. The "Order" indicator may be shown when a short period of time (or a limited volume of water) remains which can be appropriately treated by the remaining water treatment composition. The "Replace" indicator may be shown when the amount of time that has elapsed since the indicator was set or reset (or the volume of water treatable by the composition) has been detected by the flow meter thereby indicating to an operator that the water treatment composition must be replaced or recharged. Intervals could also be shown by an indicator such as intervals of 10% up to 100% may also be displayed. Similarly, intervals such as by weeks, months, days, etc. may also be displayed.

In one embodiment, the flow indicator could be triggered to indicate the need to replace a cartridge based on whichever criteria is met first, namely a predetermined volume or a predetermined time.

In some embodiments, the system may also include a pH sensor **1056**. The pH sensor **1056** can be located in a variety of locations. The pH sensor **1056** can measure the pH of the untreated water. For example, the pH sensor **1056** can be located upstream from the inlet **1024** but downstream from a point where the main and subsidiary streams **1014** and **1016** separate. In this embodiment, the pH sensor **1056** measures the pH of the subsidiary stream **1016** before it contacts the water treatment composition **1032** in the cartridge **1028**. In another embodiment, the pH sensor **1056** can be located upstream from where the main and subsidiary streams **1014** and **1016** separate. In this embodiment, the pH sensor **1056** measures the pH of the water supply **1012**. In another embodiment, the pH sensor **1056** can be located downstream from the point where the main and subsidiary streams **1014** and **1016** separate thereby measuring the pH of the main stream **1013**.

The pH sensor **1056** can also measure the pH of treated water. In that instance, the pH sensor **1056** can be located downstream from the point where the main and subsidiary streams **1014** and **1016** come together. In this embodiment, the pH sensor **1056** measures the pH of the treated water. In another embodiment, the pH sensor **1056** can measure the pH of the subsidiary stream. In that instance, the pH sensor is located at a point before the main and subsidiary streams recombine.

The pH sensor **1056** may be operably connected to the flow control device **1054.** In such embodiments, the pH sensor can sense the pH of the water supply **1012** and actuate the flow control device to increase or decrease the volume of subsidiary stream **1016** which is joined to the main stream **1014.** For example, the pH sensor may sense that the pH of the treated water (at a point downstream from where the main and subsidiary streams combine) is too basic. In such a case, the flow control device **1054** increases the volume of subsidiary stream **1016** to draw more water treatment composition into the treated water. Similarly, the pH sensor may sense that the pH of the treated water that is too acidic. In such a case, the flow control device **1054** decreases the volume of subsidiary stream **1016** to reduce the amount of water treatment composition going into the treated water.

In another example, the pH sensor **1056** may sense that the pH of the water supply **1012** has a pH value greater than expected. In such a case, the flow control device **1054** increases the volume of subsidiary stream **1016** to draw more water treatment composition into the treated water. Similarly, the pH sensor may sense that the pH of the water supply is too acidic. In such a case, the flow control device **1054** decreases the flow of subsidiary stream **1016** to reduce the amount of water treatment composition going into the treated water.

In these examples, the pH sensor may be substituted with a mineral detection device which dynamically detects the amount of minerals in the water supply (such as calcium, magnesium, or other such minerals). As the amount of dissolved minerals increases in the water supply, the flow control device **1054** can be modulated to increase the volume of subsidiary stream **1016** thereby increasing the amount of water treatment composition delivered into the treated water. Conversely, as the amount of dissolved minerals decreases in the water supply, the flow control device **1054** can be modulated to decrease the volume of subsidiary stream **1016** thereby decreasing (or eliminating) the amount of water treatment composition delivered into the treated water.

In some embodiments, the water treatment system may include both a pH sensor and a mineral detection device which both affect the flow control device. Such devices, since they are dynamic, can prevent excess consumption of the water treatment composition, thereby reducing unnecessary use and expense.

In those embodiments using a flow control device **1054** which is not dynamic, such as the one depicted in **FIG. 11A**, an operator can determine the amount of water treatment composition necessary for treating the water and select a corresponding device which is restrictive enough to limit the subsidiary stream **1016** passing through the water treatment device **1018**. In some embodiments, the flow control device **1054** is modular such that it can be removed and replaced with another flow control device that restricts the subsidiary stream **1016** appropriate for measurements taken on an infrequent basis by an operator.

In some embodiments, the main and subsidiary streams and a portion of the water treatment device are contained within an enclosure **1058**, such as shown in phantom in **FIGS. 8-11**. Such enclosures may be implemented for aesthetic purposes and have openings for the water supply to enter and exit as well as an opening for some portion of the treatment device to extend out of the enclosure **1058**.

In operation, the device depicted in **FIG. 8** enables one to soften water by dividing a water supply into a main stream and a subsidiary stream; contacting a water treatment composition with the subsidiary stream in a water treatment device thereby dissolving a portion of the water treatment composition into the subsidiary stream; and recombining the subsidiary stream carrying water treatment composition with the main stream at a controlled rate thereby softening the water and resulting in treated water. As shown in **FIG. 8**, the main and subsidiary streams are divided and recombined outside of the water treatment device. The method may also include optional pH monitoring such as of the subsidiary stream, water supply, or treated water. Such monitoring may be integrated with a flow control member to determine the flow rate of the subsidiary stream. An optional monitory may be used to display the cumulative value of the subsidiary stream and include an indicator for alerting a user when a predetermined volume is reached.

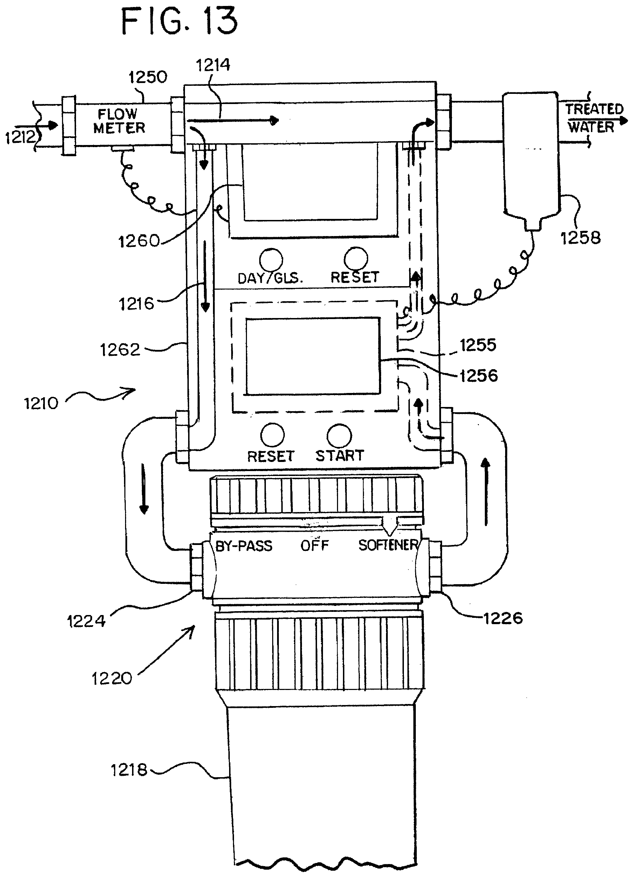

In another embodiment shown in **FIG. 13**, a water treatment system **210** may be integrated into an industrial water system, a whole house water system or optionally integrated into specific water circuits with a water supply **1212**. Water from the water supply **1212** can be divided into a plurality of streams including a main stream **1214** and a subsidiary stream **1216**. The subsidiary stream **1216** diverges away from the water supply to a water treatment device **1218**. As shown, the streams are divided at a point outside the water treatment device **1218** but inside an enclosure **1262.**

The enclosure **1262** may include a variety of optional components such as a display **1260** which may identify information from a flow meter **1250** or a timer for tracking the volume of treated water or the time the water treatment system has been treating water. Various buttons can be operably connected to the display **1260** to select settings of displaying volume or time, or for resetting the meter to start from a start value. In some embodiments, the display may indicate a volume such as liters or gallons or a time value.

The enclosure **1262** may also have a pH sensor display **1256** in operable connection to one or more pH sensors **1258**. The display could show the pH of the untreated water supply **1212** and the treated water depending upon where the sensor **1258** is located. As shown in **FIG. 13**, a pH sensor **1258** is located at a point downstream from where the main and subsidiary streams **1214** and **1216** are recombined.

Like the embodiment shown in **FIG. 8**, the subsidiary stream **1216** enters the water treatment device through an inlet **1224**, passes through the device in a softening position and out an outlet **1226**.

Inside the enclosure **1262**, the outlet may lead to an injector **1255** which acts as the flow controller. The injector **1255** can be operably connected to the flow meter **1250** and/or pH sensor **1258** so that signal from the flow meter or pH sensor detects that more water treatment is appropriate. In such a condition the injector **1255** increases the relative flow of the subsidiary stream **1216**. Alternatively, the flow meter or pH sensor detects that less water treatment is appropriate. In such a condition, the injector **1255** decreases the relative flow of the subsidiary stream **1216**.

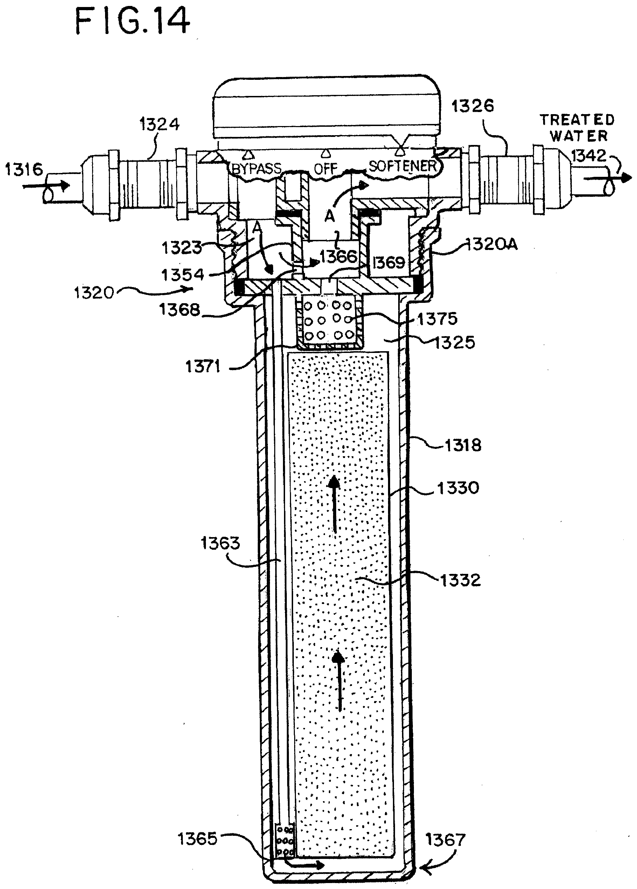

In another embodiment depicted in **FIG. 14**, water treatment device **1318** includes an upper compartment **1323** and a lower compartment **1325**. The upper compartment **1323** substantially surrounds the bottom segment **1320A** of the head portion **1320**. The lower compartment **1325** contains water treatment composition **1332** within a water-permeable bag 1330.

The subsidiary stream **1316** can pass through an inlet **1324** to the upper compartment **1323** and then to the lower compartment **1325** through an extended passageway **1363** to a deflecting baffle **1365** located near the bottom **1367** of the water treatment device **1318**. Therein the flow path through the lower compartment substantially traverses the largest dimensional path of compartment.

In this embodiment, the water treatment device **1318** also includes a flow restricting flow control body **1354**. The flow control body **1354** may be integrated or fixed with the center of the head and concentric with a channel **1366** leading up through the head and out the water treatment device **1318** through an outlet **1326**. The flow control body may be in fluid communication with both the upper and lower compartments **1323** and **1325**.

The flow control body **1354** can connect to the lower compartment **1325** through a bridging channel **1369** and baffle **3171**. The baffle can include a plurality of holes **1373** through which water from the subsidiary stream **1316** that has passed over the water-permeable container **1330** may pass into the flow control body **1354**. The subsidiary stream may then exit through outlet **1326** and mix with main stream **1314** yielding treated water **1342**.

The flow control body **1354** can connect to the upper compartment **1323** through a connecting passageway **1368**, which in some embodiments, is substantially perpendicular to a central axis of the water treatment device **1318**. The diameters of the connecting passageway **1368** and bridging channel **1369** may be selected to affect the volume of the subsidiary stream passing into the second compartment and, therefore, over the water-permeable container **1330** and water treatment composition **1332**. The larger the diameter of the bridging channel **369**, the greater the volume of subsidiary stream **1316** that will contact the water treatment composition **1332**. In contrast, the larger the diameter of the connecting passageway **1368**, the less volume of water of the subsidiary stream **1316** that will contact the water treatment composition **1332**.

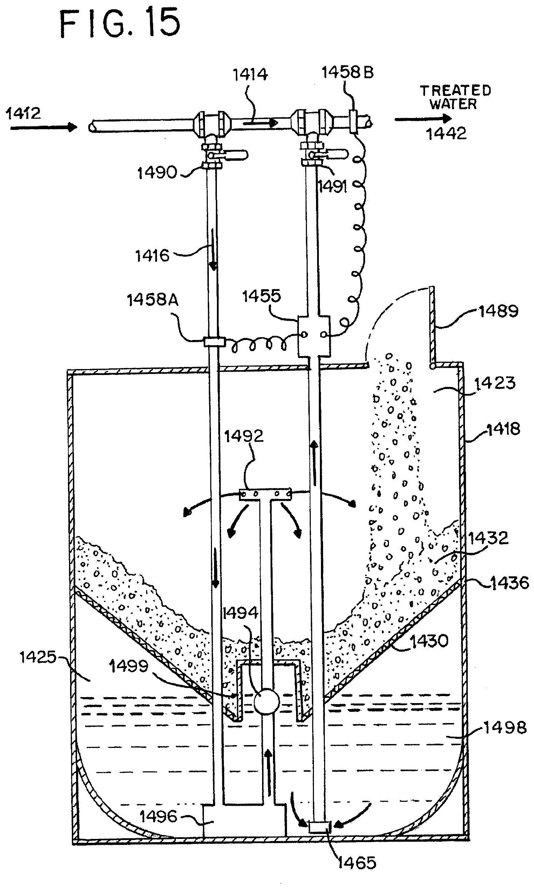

In another embodiment depicted in **FIG. 15**, a water treatment device **1418** has an upper compartment **1423** and a lower compartment **1425**. The upper and lower compartments **1423** and **1425** are separated and adjoin one another by a water-permeable material **1430** which slopes from a higher elevation at the device wall **1436** to a lower elevation near the center of the device **1418**. The upper compartment **1423** can be filled with water treatment composition **1432** through an access door **1489**. The water treatment composition can be of a variety of forms, including pellets and compressed pellets.

In the embodiment of **FIG. 15**, a water supply **1412** is divided into a plurality of streams including a main stream **1414** and a subsidiary stream **1416**. An optional valve **1490** can be used to stop flow of subsidiary stream **1416** to the water treatment device **1418** at a point between the water treatment device **1418**, and the point at which the main stream and subsidiary streams are divided. Moreover, an optional valve **1491** can be used to stop flow of subsidiary stream **1416** to rejoin the main stream **1414**.

Subsidiary stream **1416** enters the water treatment device **1418** and travels to a float valve **1496**. In some embodiments, the float valve **1496** is in the second compartment **1425** as shown in **FIG. 15**. The float valve **1496**, however, can also be located in the first compartment in other embodiments. A float **1494** is operably connected to the float valve **1496**. The subsidiary stream travels from the float valve **1496** to internal tank outlet **1492**. The internal tank outlet may be in the form of a sprayer so that the subsidiary stream is sprayed or dispersed into the upper compartment **1423** and onto the water treatment composition **1432**. The subsidiary stream **1416** then passes through the water-permeable material **1430** driven by gravity accumulating into the lower compartment **1425**. When the volume of the subsidiary stream accumulates to a predetermined level, float **1494** closes float valve **1496** so as to prevent the water treatment device from overflowing with water. In some embodiments, float **1494** does not close float valve **1496** until the height of the accumulated subsidiary stream **1498** is at a height greater than the lowest elevation of the water treatment composition in the second compartment **1425**.

Accumulated subsidiary stream **1498** exits the water treatment device **1418** through an intake baffle **1465** located at the bottom of the second compartment **1425**. The volume of subsidiary stream **1416** exiting the water treatment device **1418** is controlled by a flow control device. The flow control device can be an injector **1455** that is operably connected to one or more pH sensors. In **FIG. 15**, the water treatment system **1410** includes a first pH sensor **1458A** and a second pH sensor **1458B**. The first pH sensor can be located at a point upstream from where the subsidiary stream **1416** contacts the water treatment composition **1432**, for example outside of the water treatment device **1418** but at a point after the subsidiary stream **1416** divides from the main stream **1414**. A second pH sensor can be located at a point downstream from where the subsidiary stream **1416** contacts the water treatment composition **1432**, for example outside the water treatment device **1418** at a point after the subsidiary stream **1416** recombines with the main stream **1414**. When the pH sensors call for additional water treatment, the injector **1455** can increase the flow rate of the subsidiary stream **1416** combining with the main stream **1418** thereby carrying more water treatment composition **1432** into the treated water.

In another embodiment, a water treatment system main includes a plurality of streams, including a main stream to be treated and a subsidiary stream carrying water treatment composition. In an embodiment, the subsidiary stream may originates from a tank containing water and water treatment composition. The water in the tank can be saturated or less than saturated but set to a specified concentration. Water from the tank is then fed through a flow control such a pump or injector combining with the main stream of treated water. In some embodiments, the flow control is operably connected to a pH sensor which can be located on the main stream or at a point downstream from where the subsidiary and main streams converge. A variety of pumps and injectors are available with programmed flow rates based on pH input from pH sensors. For example, one such injector is available from Injecta® Reita, Italy.

## Claims

1. A water treatment system (1010, 1210) for softening water by adding a water treatment composition to water, said system comprising:
a) a supply of water (1012, 1212) divided into a main stream (1014, 1214) and a subsidiary stream (1016, 1216);
b) a water treatment device (1018, 1218) comprising:
i) an inlet (1024, 1224) and an outlet (1026, 1226), the inlet (1024, 1224) for receiving the subsidiary stream (1016, 1216) into the device (1018, 1218);
ii) a body portion (1022) comprising at least two compartments, including a first compartment (1023) and a second compartment (1025), the second compartment (1025) containing a water treatment composition (1032), the body portion (1022) having a bottom (1021);
iii) a head portion (1020, 1220) onto which the inlet (1024, 1224) and the outlet (1026, 1226) are mounted, the head portion (1020, 1220) comprising a first channel for directing the subsidiary stream (1016, 1216) through the water treatment device (1018, 1218), from the inlet (1024, 1224) into the first compartment (1023) and then into the second compartment (1025), so as to dissolve a portion of the water treatment composition (1032, 1132) into the subsidiary stream (1016, 1216), and out the outlet (1026, 1226), and a second channel for directing the subsidiary stream (1016, 1216) only through the head portion (1020, 1220) between the inlet (1024, 1224) and the outlet (1026, 1226) thereby bypassing the first compartment (1023) and the second compartment (1025); and
c) a flow control device (1054, 1255) controlling the flow rate of the subsidiary stream (1016, 1216) through the water treatment device (1018, 1218);
wherein the main (1014, 1214) and subsidiary streams (1016, 1216) are divided and recombined outside of the water treatment device (1018, 1218),
wherein the second compartment (1025) is a cartridge (1028) having a first and a second opening (1046, 1047), the first opening (1046) for receiving the subsidiary stream (1016, 1216) into the cartridge (1028), and the second opening (1047) for the subsidiary stream (1016, 1216) to exit the cartridge (1028), the first opening (1046) at a bottom portion (1044) adjacent to the bottom (1021), the second opening (1047) adjacent to the head portion (1020, 1220), and the cartridge (1028) encloses a water-permeable bag (1030, 1100) containing the water treatment composition (1032).

2. The system (1010, 1210) of claim 1, further comprising a first pH monitor (1056, 1256).

3. The system (1010, 1210) of claim 2, further comprising a second pH monitor (1056, 1256).

4. The system (1010, 1210) of any one of claims 2 and 3, wherein the first pH monitor (1056, 1256) monitors the pH of the water supply (1012, 1212).

5. The system (1010, 1210) of any one of claims 2 and 3, wherein the first pH monitor (1056, 1256) monitors the pH of the subsidiary stream (1016, 1216) exiting the water treatment device (1018, 1218).

6. The system (1010, 1210) of any one of claims 1-5, further comprising a flow meter (1050, 1250) that measures the flow of the subsidiary stream (1016, 1216).

7. The system (1010, 1210) of any one of claims 1-6, wherein the head portion (1020, 1220) further comprises
a path selector (1034) for selectively directing the subsidiary stream (1016, 1216) to one of the first channel and the second channel.

8. The system (1010, 1210) of any one of claims 1-7 and 10, wherein the flow control device (1054, 1255) is selected from the group consisting of: a restricting passageway (1070), a valve (1080), an electronic pump (1092), an injector (1255), and combinations of the same.

9. The system (1010, 1210) of claim 8, wherein the flow control device (1054, 1255) is selected from an electronic pump (1092) and an injector (1255) and is responsive to the pH of water selected from the supply water (1012, 1212) or the treated water (1042).

10. The system (1010, 1210) of claim 1, wherein the water-permeable bag (1100) is flexible and has a first end having a resealable opening through which water treatment composition (1032, 1132) may be added to the water-permeable bag (1100), wherein the resealable opening is selected from the group consisting of: zipper, stitching, hook and pile fastener, contact adhesive, and heat adhesive.

11. The system (1010, 1210) of any one of claims 1-10, wherein the water treatment composition (1032, 1132) comprises citric acid and polyphosphate.

12. The system (1010, 1210) of claim 11, wherein the ratio of polyphosphate to citric acid is in the range of about 1:40 to about 2:5.

13. The system (1010, 1210) of any one of claims 1-10, wherein the water treatment composition (1032, 1132) comprises citric acid.

14. A method of softening water, comprising:
using the water treatment system (1010, 1210) according to any one of claims 1-12;
dividing the supply of water (1012, 1212) into the main stream (1014, 1214) and the subsidiary stream (1016, 1216);
contacting the water treatment composition (1032, 1132) with the subsidiary stream (1016, 1216) in the water treatment device (1018, 1218) of said water treatment system (1010, 1210) thereby dissolving a portion of the water treatment composition (1032, 1132) into the subsidiary stream (1016, 1216);
recombining the subsidiary stream (1016, 1216) carrying water treatment composition (1032, 1132) with the main stream (1014, 1214) at a controlled rate thereby softening the supply of water (1012, 1212).

15. The method of claim 14, wherein the water treatment composition (1032, 1132) comprises citric acid.

## Patentansprüche

1. Wasserbehandlungssystem (1010, 1210) zum Enthärten von Wasser durch Hinzufügen einer Wasserbehandlungszusammensetzung zum Wasser, wobei das System aufweist:
a) eine Wasserzufuhr (1012, 1212), die in einen Hauptstrom (1014, 1214) und einen Nebenstrom (1016, 1216) unterteilt ist;
b) eine Wasserbehandlungsvorrichtung (1018, 1218), welche aufweist:
i) einen Einlass (1024, 1224) und einen Auslass (1026, 1226), wobei der Einlass (1024, 1224) zur Aufnahme des Nebenstroms (1016, 1216) in die Vorrichtung (1018, 1218) dient;
ii) einen Körperabschnitt (1022), der zumindest zwei Abteile aufweist, einschließlich einem ersten Abteil (1023) und einem zweiten Abteil (1025), wobei das zweite Abteil (1025) eine Wasserbehandlungszusammensetzung (1032) enthält, wobei der Körperabschnitt (1022) einen Boden (1021) aufweist;
iii) einen Kopfabschnitt (1020, 1220), auf dem der Einlass (1024; 1224) und der Auslass (1026, 1226) angebracht sind, wobei der Kopfabschnitt (1020, 1220) einen ersten Kanal aufweist, um den Nebenstrom (1016, 1216) von dem Einlass (1024, 1224) in das erste Abteil (1023) und dann in das zweite Abteil (1025) durch die Wasserbehandlungsvorrichtung (1018, 1218), um einen Anteil der Wasserbehandlungszusammensetzung (1032, 1132) in dem Nebenstrom (1016, 1216) aufzulösen, und aus dem Auslass (1026, 1226) zu leiten, sowie einen zweiten Kanal zum Leiten des Nebenstroms (1016, 1216) nur durch den Kopfabschnitt (1020, 1220) zwischen dem Einlass (1024, 1224) und dem Auslass (1026, 1226), um hierdurch das erste Abteil (1023) und das zweite Abteil (1025) zu umgehen; und
c) eine Strömungssteuervorrichtung (1054, 1255), die die Strömungsrate des Nebenstroms (1016, 1216) durch die Wasserbehandlungsvorrichtung (1018, 1218) steuert;
wobei die Haupt- (1014, 1214) und Nebenströme (1016, 1216) außerhalb der Wasserbehandlungsvorrichtung (1018, 1218) unterteilt und wiedervereinigt sind,
wobei das zweite Abteil (1025) eine Patrone (1028) mit einer ersten und einer zweiten Öffnung (1046, 1047) ist, wobei die erste Öffnung (1046) dazu dient, dass der Nebenstrom (1016, 1216) in der Patrone (1028) aufgenommen wird, und die zweite Öffnung (1027) dazu dient, dass der Nebenstrom (1016, 1216) die Patrone (1028) verlässt, wobei die erste Öffnung (1046) an einem Bodenabschnitt (1044) dem Boden (1021) benachbart ist, und die zweite Öffnung (1027) dem Kopfabschnitt (1020, 1220) benachbart ist, und die Patrone (1028) einen wasserdurchlässigen Sack (1030, 1100) umschließt, der die Wasserbehandlungszusammensetzung (1032) enthält.

2. Das System (1010, 1210) nach Anspruch 1, das ferner einen ersten pH-Monitor (1056, 1256) aufweist.

3. Das System (1010, 1210) nach Anspruch 2, das ferner einen zweiten pH-Monitor (1056, 1256) aufweist.

4. Das System (1010, 1210) nach einem der Ansprüche 2 und 3, wobei der erste pH-Monitor (1056, 1256) den pH der Wasserzufuhr (1012, 1212) überwacht.

5. Das System (1010, 1210) nach einem der Ansprüche 2 und 3, wobei der erste pH-Monitor (1056, 1256) den pH des Nebenstroms (1016, 1216) überwacht, der die Wasserbehandlungsvorrichtung (1018, 1218) verlässt.

6. Das System (1010, 1210) nach einem der Ansprüche 1 bis 5, das ferner einen Strömungsmesser (1050, 1250) aufweist, der die Strömung des Nebenstroms (1016, 1216) misst.

7. Das System (1010, 1210) nach einem der Ansprüche 1 bis 6, wobei der Kopfabschnitt (1020, 1220) ferner einen Weg-Selektor (1034) aufweist, um den Nebenstrom (1016, 1216) selektiv zu einem des ersten Kanals und des zweiten Kanals zu leiten.

8. Das System (1010, 1210) nach einem der Ansprüche 1 bis 7 und 10, wobei die Strömungssteuervorrichtung (1054, 1255) ausgebildet ist aus der Gruppe bestehend aus: einem verengten Kanal (1070), einem Ventil (1080), einer elektronischen Pumpe (1092), einem Injektor (1255) und Kombinationen derselben.

9. Das System (1010, 1210) nach Anspruch 8, wobei die Strömungssteuervorrichtung (1054, 1255) aus einer elektronischen Pumpe (1092) und einem Injektor (1255) ausgebildet ist, und auf den pH von Wasser anspricht, das ausgewählt ist aus dem zugeführten Wasser (1012, 1212) oder dem behandelten Wasser (1042).

10. Das System (1010, 1210) nach Anspruch 1, wobei der wasserdurchlässige Sack (1100) flexibel ist und ein erstes Ende mit einer wiederverschließbaren Öffnung aufweist, durch die die Wasserbehandlungszusammensetzung (1032, 1132) in den wasserdurchlässigen Sack (1100) gegeben werden kann, wobei die wiederverschließbare Öffnung ausgewählt ist aus der Gruppe bestehend aus Reißverschluss, Naht, Klettverschluss, Kontaktkleber und Heißkleber.

11. Das System (1010, 1210) nach einem der Ansprüche 1 bis 10, wobei die Wasserbehandlungszusammensetzung (1032, 1132) Zitronensäure und Polyphosphat aufweist.

12. Das System (1010, 1210) nach Anspruch 11, wobei das Verhältnis von Polyphosphat zu Zitronensäure im Bereich von etwa 1:40 bis etwa 2:5 liegt.

13. Das System (1010, 1210) nach einem der Ansprüche 1 bis 10, wobei die Wasserbehandlungszusammensetzung (1032, 1132) Zitronensäure aufweist.

14. Verfahren zum Enthärten von Wasser, welches aufweist:
Verwenden des Wasserbehandlungssystems (1010, 1210) nach einem der Ansprüche 1 bis 12;
Unterteilen der Wasserzufuhr (1012, 1212) in den Hauptstrom (1014, 1214) und den Nebenstrom (1016, 1216);
Kontaktieren der Wasserbehandlungszusammensetzung (1032, 1132) mit dem Nebenstrom (1016, 1216) in der Wasserbehandlungsvorrichtung (1018, 1218) des Wasserbehandlungssystems (1010, 1210), um hierdurch einen Anteil der Wasserbehandlungszusammensetzung (1032, 1132) in dem Nebenstrom (1016, 1216) aufzulösen;
Wiedervereinigen des die Wasserbehandlungszusammensetzung (1032, 1132) mitführenden Nebenstroms (1016, 1216) mit dem Hauptstrom (1014, 1214) mit einer gesteuerten Rate, um hierdurch die Wasserzufuhr (1012, 1212) zu enthärten.

15. Das Verfahren nach Anspruch 14, wobei die
Wasserbehandlungszusammensetzung (1032, 1132) Zitronensäure aufweist.

## Revendications

1. Système de traitement d'eau (1010, 1210) pour adoucir une eau en ajoutant une composition de traitement d'eau à une eau, ledit système comprenant :
a) une alimentation en eau (1012, 1212) divisée en un flux principal (1014, 1214) et un flux secondaire (1016, 1216) ;
b) un dispositif de traitement d'eau (1018, 1218) comprenant :
i) une entrée (1024, 1224) et une sortie (1026, 1226), l'entrée (1024, 1224) étant destinée à recevoir le flux secondaire (1016, 1216) dans le dispositif (1018, 1218) ;
ii) une partie de corps (1022) comprenant au moins deux compartiments, comportant un premier compartiment (1023) et un deuxième compartiment (1025), le deuxième compartiment (1025) contenant une composition de traitement d'eau (1032), la partie de corps (1022) ayant un fond (1021) ;
iii) une partie de tête (1020, 1220) sur laquelle sont montées l'entrée (1024, 1224) et la sortie (1026, 1226), la partie de tête (1020, 1220) comprenant un premier canal pour diriger le flux secondaire (1016, 1216) à travers le dispositif de traitement d'eau (1018, 1218), de l'entrée (1024, 1224) jusque dans le premier compartiment (1023), et ensuite dans le deuxième compartiment (1025), de manière à dissoudre une partie de la composition de traitement d'eau (1032, 1132) dans le flux secondaire (1016, 1216), et hors de la sortie (1026, 1226), et un deuxième canal pour diriger le flux secondaire (1016, 1216) uniquement à travers la partie de tête (1020, 1220) entre l'entrée (1024, 1224) et la sortie (1026, 1226) contournant ainsi le premier compartiment (1023) et le deuxième compartiment (1025) ; et
c) un dispositif de régulation de débit (1054, 1255) régulant le débit du flux secondaire (1016, 1216) à travers le dispositif de traitement d'eau (1018, 1218) ;
dans lequel les flux principal (1014, 1214) et secondaire (1016, 1216) sont divisés et recombinés à l'extérieur du dispositif de traitement d'eau (1018, 1218),
dans lequel le deuxième compartiment (1025) est une cartouche (1028) ayant des première et deuxième ouvertures (1046, 1047), la première ouverture (1046) étant destinée à recevoir le flux secondaire (1016, 1216) dans la cartouche (1028), et la deuxième ouverture (1047) étant destinée à faire sortir le flux secondaire (1016, 1216) de la cartouche (1028), la première ouverture (1046) se trouve au niveau d'une partie inférieure (1044) adjacente au fond (1021), la deuxième ouverture (1047) est adjacente à la partie de tête (1020, 1220), et la cartouche (1028) renferme un sac perméable à l'eau (1030, 1100) contenant la composition de traitement d'eau (1032).

2. Système (1010, 1210) de la revendication 1, comprenant en outre un premier pH mètre (1056, 1256).

3. Système (1010, 1210) de la revendication 2, comprenant en outre un deuxième pH mètre (1056, 1256).

4. Système (1010, 1210) de l'une quelconque des revendications 2 et 3, dans lequel le premier pH mètre (1056, 1256) surveille le pH de l'alimentation en eau (1012, 1212).

5. Système (1010, 1210) de l'une quelconque des revendications 2 et 3, dans lequel le premier pH mètre (1056, 1256) surveille le pH du flux secondaire (1016, 1216) sortant du dispositif de traitement d'eau (1018, 1218).

6. Système (1010, 1210) de l'une quelconque des revendications 1 à 5, comprenant en outre un débitmètre (1050, 1250) qui mesure le débit du flux secondaire (1016, 1216).

7. Système (1010, 1210) de l'une quelconque des revendications 1 à 6, dans lequel la partie de tête (1020, 1220) comprend en outre
un sélecteur de chemin (1034) pour diriger sélectivement le flux secondaire (1016, 1216) vers l'un des premier et deuxième canaux.

8. Système (1010, 1210) de l'une quelconque des revendications 1 à 7 et 10, dans lequel le dispositif de régulation de débit (1054, 1255) est choisi dans le groupe consistant en : un passage d'étranglement (1070), une soupape (1080), une pompe électronique (1092), un injecteur (1255) et leurs combinaisons.

9. Système (1010, 1210) de la revendication 8, dans lequel le dispositif de régulation de débit (1054, 1255) est choisi entre une pompe électronique (1092) et un injecteur (1255) et réagit au pH d'une eau choisie entre l'eau d'alimentation (1012, 1212) et l'eau traitée (1042).

10. Système (1010, 1210) de la revendication 1, dans lequel le sac perméable à l'eau (1100) est flexible et a une première extrémité ayant une ouverture refermable à travers laquelle une composition de traitement d'eau (1032, 1132) peut être ajoutée au sac perméable à l'eau (1100), où l'ouverture refermable est choisie dans le groupe consistant en : une fermeture à glissière, un agrafage, une fermeture autoagrippante, un adhésif de contact et un adhésif thermique.

11. Système (1010, 1210) de l'une quelconque des revendications 1 à 10, dans lequel la composition de traitement d'eau (1032, 1132) comprend l'acide citrique et un polyphosphate.

12. Système (1010, 1210) de la revendication 11, dans lequel le rapport du polyphosphate à l'acide citrique est compris dans l'intervalle allant d'environ 1:40 à environ 2:5.

13. Système (1010, 1210) de l'une quelconque des revendications 1 à 10, dans lequel la composition de traitement d'eau (1032, 1132) comprend l'acide citrique.

14. Procédé d'adoucissement d'eau, comprenant les étapes consistant :
à utiliser le système de traitement d'eau (1010, 1210) selon l'une quelconque des revendications 1 à 12 ;
à diviser l'alimentation en eau (1012, 1212) en le flux principal (1014, 1214) et le flux secondaire (1016, 1216) ;
à mettre en contact la composition de traitement d'eau (1032, 1132) avec le flux secondaire (1016, 1216) dans le dispositif de traitement d'eau (1018, 1218) dudit système de traitement d'eau (1010, 1210) dissolvant ainsi une partie de la composition de traitement d'eau (1032 , 1132) dans le flux secondaire (1016, 1216) ;
à recombiner le flux secondaire (1016, 1216) contenant la composition de traitement d'eau (1032, 1132) avec le flux principal (1014, 1214) à une vitesse régulée, adoucissant ainsi l'alimentation en eau (1012, 1212).

15. Procédé de la revendication 14, dans lequel la composition de traitement d'eau (1032, 1132) comprend l'acide citrique.
